# EUROPÄISCHE PATENTSCHRIFT

(11) **EP 0 612 177 B1**
(45) Veröffentlichungstag und Bekanntmachung des Hinweises auf die Patenterteilung: **07.07.1999**
(21) Anmeldenummer: 94101330.2
(22) Anmeldetag: 29.01.1994
(51) Int. Cl.: H04M 1/72, H04M 9/02

(54) **Schaltungsanordnung zur Aktivierung von Geräten über eine Übertragungsleitung**
Circuit arrangement for the activation of apparatuses via a transmission line
Dispositif de circuit pour activer des appareils le long d'une ligne de transmission

(30) Priorität: 16.02.1993 CH 47493
(43) Veröffentlichungstag der Anmeldung: 24.08.1994
(73) Patentinhaber: Siemens Schweiz AG, 8047 Zürich (CH)
(72) Erfinder: Bidese, Werner, CH-8048 Zürich (CH); Grau, Alfred, CH-8048 Zürich (CH); Fritschi, Hans-Rudolf, CH-8196 Wil (CH)

(56) Entgegenhaltungen:
- WO-A-84/01481
- GB-A- 2 039 698
- US-A- 4 020 289
- US-A- 4 958 370

## Beschreibung

Die vorliegende Erfindung betrifft ein Verfahren und ein Endgerät nach dem Oberbegriff des Patentanspruchs 1 bzw. 4, sowie ein entsprechendes Kommunikationssystem nach Patentanspruch 10.

Geräte der Kommunikationstechnik oder aus weiteren Anwendungsbereichen werden im täglichen Ablauf oft nur während kurzen Zeitabschnitten benutzt. Trotzdem bleiben diese Geräte normalerweise ununterbrochen im Betriebszustand, wodurch wertvolle Energie verschwendet wird. Insbesondere bei batteriebetriebenen Geräten macht sich dieser Energieverlust ungünstig bemerkbar. In der EP-A-0 417 425 wird ein mehrere Teilnehmerstationen bzw. Endgeräte umfassendes Telefonnetz beschrieben, das sich schnell auf- und abbauen sowie an weitere Netze anschliessen lässt. Aus der EP-A-0 417 542 ist ferner bekannt, dass sich Endgeräte an beliebigen Stellen induktiv an eine Zweidrahtleitung ankoppeln lassen. Für derartige flexible Netze mit wahlweise anschliessbaren Endgeräten werden zur Wahrung der Mobilität vorzugsweise mit Batterien versehene Stromversorgungsquellen vorgesehen. Falls sich die Endgeräte daher, wie üblich, durchgehend im Normalbetriebszustand befinden, ist mit einer kurzen Lebensdauer der Batterien, vermehrten Ausfällen im Telefonnetz und daher erhöhten Betriebskosten zu rechnen. Aus der EP-A-0 361 350 ist eine mit einer Basisstation verbundene mit einer Energiesparschaltung versehene mobile Telefonstation bekannt, deren Sendeeinheit im sogenannten Stand-by-Modus bzw. im Ruhezustand abgeschaltet ist, um den Leistungsbedarf der Telefonstation zu reduzieren. Durch ein von der Basisstation übermitteltes Steuersignal wird die Telefonstation im Bedarfsfalle wieder aktiviert. Das Steuersignal ist dabei in verschiedene Bereiche unterteilt, durch die die Telefonstation in Bereitschaft versetzt und allenfalls zum Aussenden eines Bestätigungssignals veranlasst wird. Nachteilig bei dieser Energiesparschaltung ist, dass sich zur Überwachung des Steuersignals mit Ausnahme der Sendeeinheit praktisch alle wesentlichen Schaltungsteile der Telefonstation im normalen Betriebszustand befinden müssen. Insbesondere das Empfangs- und das Steuerungsteil werden zur Detektion der codierten Steuersignale benötigt. Ferner ist diese Energiesparschaltung nur anwendbar, falls auf dem zwischen der Basis- und der Telefonstation vorgesehenen Übertragungskanal nicht noch weitere Nutz- oder Störsignale übertragen werden.

Aus der WO-A- 8 401 481 ist ferner ein Nebenstellensystem bekannt, bei dem mehrere Kommunikationsendgeräte an eine gemeinsame Übertragungsleitung angeschlossenen sind. Bei diesem System dient das lokal installierte Stromversorgungsnetz als gemeinsame Übertragungsleitung für Telefongespräche, weshalb die eingangs beschriebenen Stromversorgungsprobleme entfallen. Durch eine Messung der Signalleistung und die Prüfung eines übermittelten Codes wird festgestellt, ob die Daten für das betreffende Endgerät bestimmt sind, wonach der Analogteil des Signals zu einer Sprachsignalverarbeitungseinheit weitergeleitet wird. Eine Betriebszustandsänderung des Endgerätes mit einem Wechsel zwischen Stand-by-Modus und Normalbetriebs-Modus ist nicht vorgesehen.

Der vorliegenden Erfindung liegt daher die Aufgabe zugrunde, ein Verfahren und ein zur Durchführung des Verfahren geeignetes Endgerät anzugeben, durch die über eine Übertragungsleitung miteinander verbundene Endgeräte eines Kommunikationssystems derart betrieben werden können, dass diese im Ruhezustand einen minimalen Leistungsbedarf aufweisen.

Diese Aufgabe wird durch die im Patentanspruch 1 bzw. 4 bzw. 10 angegebenen Massnahmen gelöst. Vorteilhafte Ausgestaltungen der Erfindung sind in weiteren Ansprüchen angegeben.

Durch die erfindungsgemässe Schaltungsanordnung wird sichergestellt, dass Endgeräte nur in der Zeit aktiviert sind, in der sie durch den Anwender tatsächlich genutzt werden. Für die restliche Zeit werden die Endgeräte in einen Ruhezustand bzw. in einen Betriebszustand versetzt, in dem sie die Versorgungsquellen praktisch nicht bzw. nur soweit belasten, dass sie jederzeit wieder aktiviert werden können. Die Lebensdauer allfällig verwendeter Batterien erhöht sich dadurch beträchtlich. Die von einem Netz beanspruchte mittlere Versorgungsleistung wird entsprechend stark vermindert. Ferner erlaubt die erfindungsgemässe Schaltungsanordnung ein Aktivierungssignal über Übertragungsleitungen zu den Endgeräten zu senden, denen u.U. von weiteren Quellen bereits Rausch- oder Nutzsignale zugeführt werden. Dabei wird gewährleistet, dass die Endgeräte immer nur auf ein Aktivierungssignal und nicht auf weitere Nutz- oder Störsignale ansprechen.

Die Erfindung wird nachfolgend anhand einer Zeichnung beispielsweise näher erläutert. Dabei zeigt :
- Fig. 1: mehrere über eine Übertragungsleitung miteinander verbundene Endgeräte
- Fig. 2: eine erfindungsgemässe in den Endgeräten vorgesehene Schaltungsanordnung zur Detektion von Aktivierungssignalen
- Fig. 3: eine Schaltungsanordnung zur induktiven Ankopplung der Schaltungsanordnung nach Fig. 2 an eine Übertragungsleitung

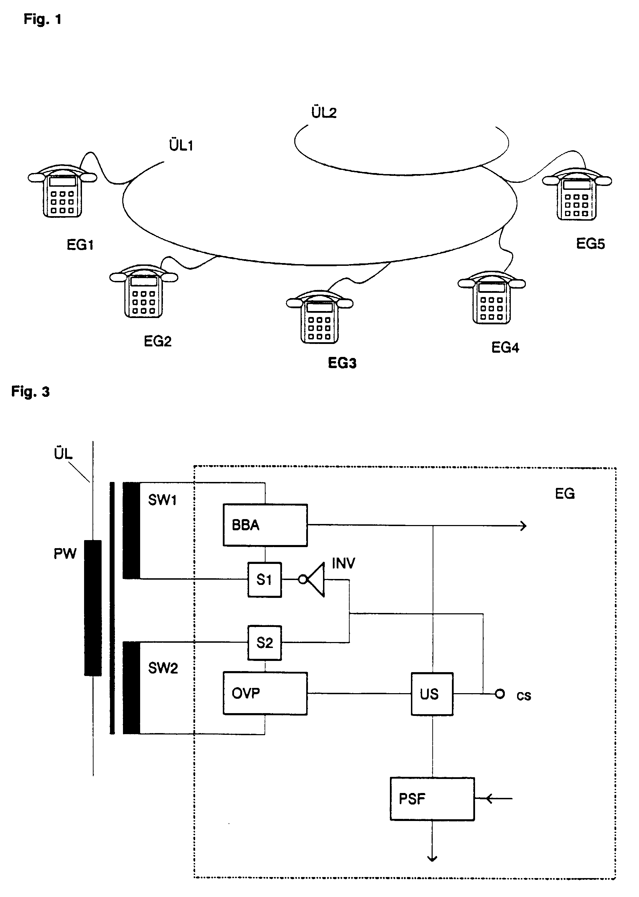

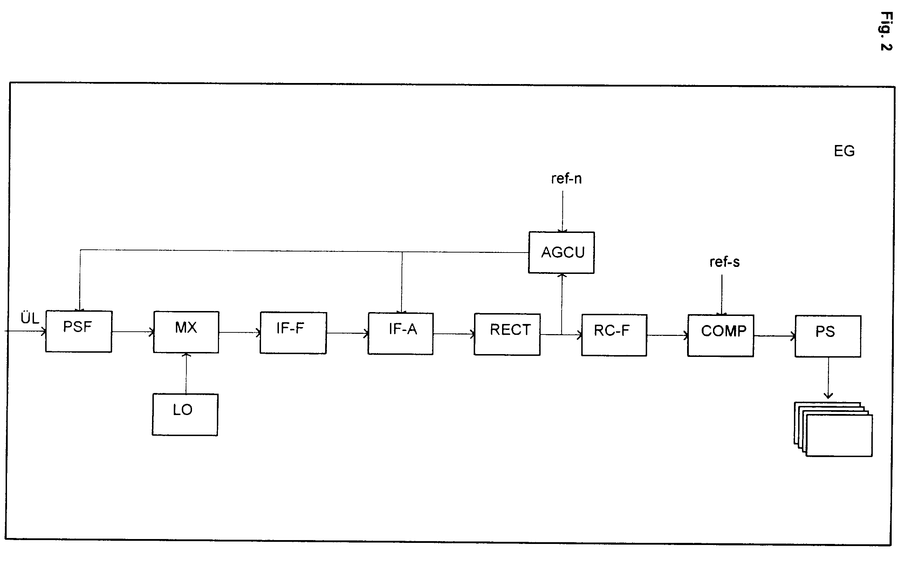

Fig. 1 zeigt mehrere Endgeräte EG1, ..., EG5 der Kommunikationstechnik, die über eine Übertragungsleitung ÜL1 miteinander verbunden sind. Ferner ist die Übertragungsleitung ÜL1 über eine Übertragungsleitung ÜL2 mit einem weiteren Kommunikationsnetz verbunden. Falls z.B. zwischen den zwei Endgeräten EG2 und EG5 eine Verbindung aufgebaut werden soll, wird in einem ersten Schritt durch den rufenden Teilnehmer, z.B. durch Betätigen eines am Endgerät EG2 vorgesehenen Kontaktes, dieses aus dem Ruhezustand in den normalen Betriebszustand versetzt. Im Ruhezustand werden nur die Schaltungsteile mit Strom versorgt, die zur Reaktivierung des Endgerätes EG benötigt werden. Z.B. ist im Ruhezustand die im Endgerät EG vorgesehene Sendeeinheit von der zugehörigen Stromversorgungseinheit getrennt. Daher wird im normalerweise vorherrschenden Ruhezustand nur ein Bruchteil der Leistung benötigt, die im normalen Betriebszustand aufgewendet werden muss. In einem weiteren Schritt wird, nach der Aktivierung des rufenden Endgerätes EG2, z.B. durch das Eingeben der Rufnummer ein Aktivierungs- oder Wecksignal an alle weiteren Endgeräte EG1, EG3, EG4 und EG5 gesandt, wonach diese, falls sie nicht bereits schon aktiviert sind, ebenfalls in den normalen Betriebszustand versetzt werden. Weiterhin wird ein mit einer Codenummer versehenes Rufsignal an alle Endgeräte EG1, EG3, EG4 und EG5 übertragen und eine Gesprächsverbindung mit dem gerufenen Endgerät EG5 aufgebaut, das der Codenummer entspricht. Die Endgeräte EG1, EG3 und EG4, denen nach Erhalt des Aktivierungssignals nicht die entsprechende Codenummer zugeführt wird, werden nach Abiauf einer relativ kurzen Zeitspanne wiederum Selbsttätig in den Ruhezustand zurückversetzt. Nach dem Abbruch der Gesprächsverbindung werden auch die Endgeräte EG2 und EG5 in den Ruhezustand zurückversetzt. Selbstverständlich können auf diese Weise auch beliebige andere über eine Übertragungsleitung ÜL miteinander verbundene Geräte, wie z.B. Mess- oder Überwachungsgeräte, wahlweise aktiviert und geschaltet werden.

Die in Fig. 2 gezeigte, vorzugsweise in jedem Endgerät EG vorgesehene erfindungsgemässe Schaltungsanordnung weist eine Vorselektionsstufe PSF auf, die über eine mit einem Lokaloszillator LO verbundene Mischstufe MX und zwei Zwischenfrequenzstufen IF-F und IF-A mit einer Gleichrichterstufe RECT verbunden ist. Der Ausgang der Gleichrichterstufe RECT ist einerseits mit einer Regelstufe AGCU und andererseits über eine Filterstufe RC-F mit einem Komparator COMP verbunden, dessen Ausgangssignal einer Steuereinheit PS zugeführt wird. Der Regelstufe AGCU und dem Komparator COMP wird ferner eine Referenzspannung ref-n bzw. ref-s zugeführt.

Die Schaltungsanordnung funktioniert wie folgt:

Das Eingangssignal, in dem zeitweise z.B. pulsförmige Aktivierungssignale mit einer Länge von 500 ms und einer Frequenz von 35'440 Hz enthalten sind, wird der Vorselektionsstufe PSF zugeführt, darin z.B. in einem Bandpassfilter gefiltert und in einer vorzugsweise steuerbaren Verstärkerstufe vorverstärkt. Durch die Vorselektionsstufe PSF wird das Eingangssignal daher von einem Teil der störenden Signal- und Rauschanteile befreit. Die Güte des Bandpassfilters kann in der Vorselektionsstufe PSF tief gehalten werden, da im anschliessenden Zwischenfrequenzbereich eine weitere schmalbandige Filterstufe IF-F vorgesehen ist. Das von der Vorselektionsstufe PSF und das vom Lokaloszillator LO abgegebene Signal, das die LO-Frequenz von 35'234 Hz aufweist, werden je einem Eingang der Mischstufe MX zugeführt, deren Ausgangssignal in der Zwischenfrequenzstufe IF-F gefiltert wird. In der Stufe IF-F, in der ein Bandfilter mit einer Bandbreite von etwa 40 Hz vorgesehen ist, wird ein in der Mischstufe MX gebildetes Mischprodukt von 206 Hz herausgefiltert. Störende Signalanteile, die sich ausserhalb des Durchlassbereiches des Bandfilters befinden, sind daher in dem der Gleichrichterstufe RECT über den vorzugsweise steuerbaren ZF-Verstärker IF-A zugeführten Signal weitgehend unterdrückt. Die Wirkung störender Signalanteile, die sich innerhalb des Durchlassbereiches des Bandfilters befinden, wird durch die nachfolgend beschriebenen schaltungstechnischen Massnahmen aufgehoben. Das von der Gleichrichterstufe RECT abgegebene Signal wird zu diesem Zweck der Regelstufe AGCU zugeführt, deren Ausgänge mit den Steuereingängen der in den Stufen PSF und IF-A vorgesehenen Verstärkern verbunden ist. Die von der Gleichrichterstufe RECT abgegebene Spannung wird von der Regelstufe AGCU durch die Steuerung dieser Verstärker PSF und IF-A daher auf einen Wert geregelt, der der Referenzspannung ref-n entspricht. Pulsförmige Aktivierungssignale gelangen über die Stufen PFS, MX, IF-F, IF-A und RECT daher jeweils zum Komparator COMP. Rauschsignale hingegen, deren Intensität sich nur langsam ändert, werden immer auf den Wert der Referenzspannung ref-n eingestellt. Durch diese Regelung wird daher verhindert, dass Rauschanteile und Linienstörer, die sich nicht sprunghaft ändern, die im Komparator COMP vorgegebene Schwelle überschreiten und als Aktivierungssignale detektiert werden. Die sich am Ausgang der Gleichrichterstufe RECT einstellende Spannung entspricht daher der Referenzspannung ref-n, ist jedoch mit allfälligen, relativ kurzen Impulsen überlagert, die von der Regelung nicht erfasst werden. Im Komparator COMP wird das von der Gleichrichterstufe RECT abgegebene Signal mit einer Referenzspannung ref-s verglichen. Sobald der dieser Spannung entsprechende Wert überschritten wird, detektiert der Komparator COMP ein Aktivierungssignal. Starke Störsignale, deren Dauer kürzer als die Dauer der Aktivierungssignale ist (z.B. < 50% bzw. < 250 ms), werden dabei vorzugsweise unterdrückL Die Differenz der Referenzspannungen ref-n und ref-s entspricht daher dem Mass, das die dem Rauschsignal oder dem Linienstörer überlagerten Aktivierungssignale übersteigen müssen, um als solche detektiert zu werden. Vor dem Komparator COMP ist femer eine weitere Filterstufe RC-F vorgesehen, durch die kurze Impulsspitzen und Impulse von kürzerer Impulsdauer unterdrückt werden. Signalisierungen mit kürzerer Impulsdauer, die zwischen weiteren mit der Übertragungsleitung verbundenen Endgeräten übertragen werden, können daher keine Aktivierung weiterer Endgeräte EG bewirken. Nach der Detektion eines Aktivierungssignals werden alle weiteren Teile des Endgerätes EG an die Stromversorgung angeschlossen und in Betrieb gesetzt. Durch weitere allgemein bekannte Schaltungsteile des Endgerätes EG wird während einer kurzen Zeitspanne geprüft, ob ein für das Endgerät EG vorgesehener Code eintrifft und die Verbindung zu einem Teilnehmer aufgebaut werden soll. Falls der dem Endgerät EG zugehörige Code nicht eintrifft, wird das Endgerät EG nach kurzer Zeit wieder in den Ruhezustand zurückversetzt. Das detektierte Aktivierungssignal wird daher vorzugsweise einer Steuereinheit PS zugeführt, die z.B. zur Zu- und Abschaltung der Stromversorgung zusätzlicher Schaltungseinheiten befähigt ist.

In Fig. 3 ist eine Schaltungsanordnung gezeigt, in der ein Endgerät EG induktiv an eine Übertragungsleitung ÜL angekoppelt ist. Durch vorzugsweise eine Windung der Übertragungsleitung ÜL wird dabei die Primärwicklung PW eines Transformators gebildet, dessen zwei Sekundärwicklungen SW1, SW2 über einen Schalter S1 bzw. S2 mit einer Verstärkerstufe BBA bzw. einer Eingangsstufe OVP verbunden sind. Die Stufen BBA und OVP sind femer über einen Umschalter US wechselweise mit der u.a. auch in Fig. 2 gezeigten Vorselektionsstufe PSF verbunden. Ferner sind der Umschalter US, der Schalter S2 direkt und der Schalter S1 über einen Inverter INV mit einer Steuerleitung verbunden, an der ein Steuersignal cs anliegt. Die Vorzüge induktiver Ankopplung sind aus der EP-A-0 417 425 und der EP-A-0 417 542 bekannt Selbstverständlich ist die Erfindung nicht auf diese Ankopplungsweise beschränkt, sondem z.B. auch bei galvanischer oder optischer Ankopplung einsetzbar. Im Ruhezustand des Endgerätes EG wird das in der Sekundärwicklung SW2 induzierte Signal, über die Eingangsstufe OVP, in der vorzugsweise eine Schaltung zum Schutz gegen Überspannungen vorgesehen ist und den Umschalter US zur Vorselektionsstufe PSF geleitet Das Steuersignal cs schliesst im Ruhezustand daher den Schalter S2, öffnet über den Inverter INV den Schalter S1 und setzt den Umschalter US derart, dass die Eingangsstufe OVP mit der Vorselektionsstufe PSF verbunden und die Verstärkerstufe BBA von dieser getrennt ist. Dadurch wird bewirkt, dass das primärseitig auftretende Signal vollständig auf die Sekundärwicklung SW2 übertragen wird und dort daher eine maximale Spannung auftritt. Im Ruhezustand sind dabei, wie bereits oben beschrieben, alle Schaltungsteile, die nicht zur Aktivierung des Endgerätes EG benötigt werden, von der Stromversorgung getrennt. Beispielsweise wird die Verstärkerstufe BBA, die im Ruhezustand nicht benötigt wird, abgeschaltet. Nach der Aktivierung des Endgerätes werden die Schalter S1, S2 und US umgeschaltet, wodurch die Sekundärwicklung SW2 geöffnet, die Sekundärwicklung SW1 mit dem Eingang der Verstärkerstufe BBA verbunden und deren Ausgangssignal einerseits über den Umschalter US der Vorselektionsstufe PSF und andererseits einer zur Weiterverarbeitung dieses Signals geeigneten weiteren Stufe zugeführt wird. Obwohl das Endgerät EG bereits aktiviert Ist, bleibt die in Fig. 2 gezeigte Aktivierungsschaltung weiter in Betrieb, um das dem Komparator COMP zugeführte Signal weiterhin auf einen konstanten, der Regelspannung ref-n entsprechenden Wert zu regeln. Dadurch wird gewährleistet, dass das dem Komparator zuzuführende Signal nicht nur im Ruhezustand des Endgerätes, sondem auch im normalen Betriebszustand immer auf einen konstanten, der Referenzspannung ref-n entsprechenden Wert geregelt wird. Dabei wird z.B. verhindert, dass das Rauschsignal den im Komparator COMP vorgesehenen, der Referenzspannung ref-s entsprechenden Schwellwert überschreitet, wodurch beim Übergang in den Ruhezustand fälschlicherweise sofort wieder ein Aktivierungssignal detektiert und das Endgerät EG wiederum aktiviert würde.

## Patentansprüche

1. Verfahren zur Aktivierung von über eine gemeinsame Übertragungsleitung (ÜL) miteinander verbundenen Endgeräten (EG) eines Kommunikationssystems, von denen jedes zur Abgabe von Aktivierungssignalen an alle weiteren Endgeräte (EG) vorgesehen ist, **dadurch gekennzeichnet**, dass in jedem Endgerät (EG) die übertragenen Kommunikationssignale in einem ersten und die Aktivierungssignale in einem zweiten Empfangskanal verarbeitet werden, in dem ein Komparator (COMP) vorgesehen ist, der die empfangenen Aktivierungssignale mit einer Referenzspannung (ref-s) vergleicht und nach der Detektion eines Aktivierungssignals ein Steuersignal an eine Steuereinheit (PS) abgibt, durch die das Endgerät (EG) von einem Energiesparmodus in den Normalbetriebsmodus versetzt und der erste Empfangskanal in Betrieb gesetzt wird.

2. Verfahren nach Anspruch 1, **dadurch gekennzeichnet**, dass dem Komparator (COMP) eine Filterstufe (RC-F) vorgeschaltet ist, welche tieffrequente Aktivierungssignale zur Steuereinheit (PS) passieren lässt und höherfrequente Stör- oder auf der Übertragungsleitung (ÜL) übertragene Nutzsignale sperrt.

3. Verfahren nach Anspruch 1 oder 2, **dadurch gekennzeichnet**, dass dem Komparator (COMP) bzw. der Filterstufe (RC-F) ein Regelkreis vorgeschaltet ist, durch den dessen Eingangssignale auf den Wert einer Referenzspannung (ref-n) geregelt werden und dass die Zeitkonstante des Regelkreises derart gewählt wird, dass die Aktivierungssignale praktisch unbeeinträchtigt weitergeleitet werden.

4. Endgerät (EG) für ein Kommunikationssystem, welches mehrere über eine gemeinsame Übertragungsleitung (ÜL) miteinander verbundene Endgeräte (EG) aufweist, von denen jedes zur Abgabe von Aktivierungssignalen an alle weiteren Endgeräte (EG) vorgesehen ist, **dadurch gekennzeichnet**, dass in jedem Endgerät (EG) ein erster Empfangskanal für die übertragenen Kommunikationssignale und ein zweiter Empfangskanal für die Aktivierungssignale vorgesehen ist, in dem ein Komparator (COMP) empfangene Aktivierungssignale mit einer Referenzspannung (ref-s) vergleicht und nach der Detektion eines Aktivierungssignals ein Steuersignal an eine Steuereinheit (PS) abgibt, durch die das Endgerät (EG) von einem Energiesparmodus in den Normalbetriebsmodus versetzt und der erste Empfangskanal in Betrieb gesetzt wird.

5. Endgerät (EG) nach Anspruch 4, **dadurch gekennzeichnet**, dass dem Komparator (COMP) eine Filterstufe (RC-F) vorgeschaltet ist, welche tieffrequente Aktivierungssignale zur Steuereinheit (PS) passieren lässt und höherfrequente Stör- oder auf der Übertragungsleitung (ÜL) übertragene Nutzsignale sperrt.

6. Endgerät (EG) nach Anspruch 4 oder 5, **dadurch gekennzeichnet**, dass dem Komparator (COMP) bzw. der Filterstufe (RC-F) ein Regelkreis vorgeschaltet ist, durch den dessen Eingangssignale auf den Wert einer Referenzspannung (ref-n) geregelt werden, wobei die Zeitkonstante des Regelkreises derart gewählt ist, dass die Aktivierungssignale praktisch unbeeinträchtigt weitergeleitet werden.

7. Endgerät (EG) nach Anspruch 6, **dadurch gekennzeichnet**, dass der Regelkreis aus einer steuerbaren Vorselektionsstufe (PSF), einer mit einem Lokaloszillator (LO) verbundenen Mischstufe (MX), einem Zwischenfrequenzfilter (IF-F), einem steuerbaren Zwischenfrequenzverstärker (IF-A), einer Gleichrichterstufe (RECT) und einer Regelstufe (AGCU) besteht, deren Eingang mit dem Ausgang der Gleichrichterstufe (RECT) und deren Ausgang mit den Steuereingängen der Vorselektionsstufe (PSF) und des Zwischenfrequenzverstärkers (IF-A) verbunden ist.

8. Endgerät (EG) nach einem der Ansprüche 4-7, **dadurch gekennzeichnet**, dass ein Teil der Übertragungsleitung (ÜL) die Primärwicklung (PW) eines Übertragers bildet, der zwei Sekundärwicklungen (SW1, SW2) aufweist, dass die erste Sekundärwicklung (SW1) über einen ersten Schalter (S1) mit dem ersten Eingangskanal und die zweite Sekundärwicklung (SW2) über einen zweiten Schalter (S2) mit dem zweiten Empfangskanal verbindbar und dass die Schalter (S1, S2) derart steuerbar sind, dass vor der Aktivierung des Endgerätes (EG) der zweite Empfangskanal und nach der Aktivierung des Endgerätes (EG) der erste Empfangskanal an die Übertragungsleitung (ÜL) angekoppelt ist.

9. Endgerät (EG) nach Anspruch 8, **dadurch gekennzeichnet**, dass die erste Sekundärwicklung (SW1) über den ersten Schalter (S1) mit einem ersten Eingangsverstärker (BBA) und die zweite Sekundärwicklung (SW2) über den zweiten Schalter (S2) mit einem zweiten Eingangsverstärker (OVP) verbunden ist, dass der erste und der zweite Eingangsverstärker (BBA; OVP) über einen Umschalter (US) mit der Vorselektionsstufe (PSF) verbindbar sind und dass der Umschalter (US) derart steuerbar ist, dass vor der Aktivierung des Endgerätes (EG) der Ausgang des zweiten Eingangsverstärkers (OVP) mit der Vorselektionsstufe (PSF) und nach der Aktivierung des Endgerätes (EG) der mit den Modulen des ersten Empfangskanals verbundene erste Eingangsverstärker (BBA) zusätzlich mit der Vorselektionsstufe (PSF) verbunden ist.

10. Kommunikationssystem mit wenigstens zwei Endgeräten (EG) gemäss einem der Ansprüche 4 - 9, die induktiv an eine Übertragungsleitung angekoppelt sind.

## Claims

1. Method for the activation of terminal units (EG) of a communications system, which are connected to each other by way of a common transmission line (ÜL), each of which is provided for the emission of activation signals to all other terminal units (EG), characterized in that in each terminal unit (EG) the transmitted communications signals are processed in a first receiving channel and the activation signals are processed in a second receiving channel, in which a comparator (COMP) is provided, which compares the received activation signals with a reference voltage (ref-s) and, after the detection of an activation signal, emits a control signal to a control unit (PS), by means of which the terminal unit (EG) is shifted from an energy-saving mode into the normal operating mode and the first receiving channel is put into operation.

2. Method according to claim 1, characterized in that a filter stage (RC-F) is connected upstream of the comparator (COMP), which filter stage allows low-frequency activation signals to pass to the control unit (PS) and blocks higher-frequency interference signals or useful signals transmitted on the transmission line (ÜL).

3. Method according to claim 1 or 2, characterized in that a regulating circuit is connected upstream of the comparator (COMP) or the filter stage (RC-F), by means of which regulating circuit its input signals are regulated to the value of a reference voltage (ref-n), and in that the time constant of the regulating circuit is selected in such a way that the activation signals are relayed practically unimpaired.

4. Terminal unit (EG) for a communications system, which has several terminal units (EG) connected to each other by way of a common transmission line (ÜL), each of which is provided for the emission of activation signals to all other terminal units (EG), characterized in that in each terminal unit (EG) a first receiving channel for the transmitted communications signals is provided and a second receiving channel for the activation signals is provided, in which a comparator (COMP) compares received activation signals with a reference voltage (ref-s) and, after the detection of an activation signal, emits a control signal to a control unit (PS), by means of which the terminal unit (EG) is shifted from an energy-saving mode into the normal operating mode and the first receiving channel is put into operation.

5. Terminal unit (EG) according to claim 4, characterized in that a filter stage (RC-F) is connected upstream of the comparator (COMP), which filter stage allows low-frequency activation signals to pass to the control unit (PS) and blocks higher-frequency interference signals or useful signals transmitted on the transmission line (ÜL).

6. Terminal unit (EG) according to claim 4 or 5, characterized in that a regulating circuit is connected upstream of the comparator (COMP) or the filter stage (RC-F), by means of which regulating circuit its input signals are regulated to the value of a reference voltage (ref-n), with the time constant of the regulating circuit being selected in such a way that the activation signals are relayed practically unimpaired.

7. Terminal unit (EG) according to claim 6, characterized in that the regulating circuit consists of a controllable preselection stage (PSF), a mixer stage (MX) connected to a local oscillator (LO), an intermediate-frequency filter (IF-F), a controllable intermediate-frequency amplifier (IF-A), a rectifier stage (RECT) and a regulating stage (AGCU), the input of which is connected to the output of the rectifier stage (RECT), and the output of which is connected to the control inputs of the preselection stage (PSF) and of the intermediate-frequency amplifier (IF-A).

8. Terminal unit (EG) according to one of claims 4-7, characterized in that a part of the transmission line (ÜL) forms the primary winding (PW) of a transformer, which has two secondary windings (SW1, SW2), in that the first secondary winding (SW1) is connectable by way of a first switch (S1) to the first input channel, and the second secondary winding (SW2) is connectable by way of a second switch (S2) to the second receiving channel, and in that the switches (S1, S2) are controllable in such a way that, before the activation of the terminal unit (EG), the second receiving channel is coupled to the transmission line (ÜL) and, after the activation of the terminal unit (EG), the first receiving channel is coupled to the transmission line (ÜL).

9. Terminal unit (EG) according to claim 8, characterized in that the first secondary winding (SW1) is connected by way of the first switch (S1) to a first input amplifier (BBA), and the second secondary winding (SW2) is connected by way of the second switch (S2) to a second input amplifier (OVP), in that the first and the second input amplifier (BBA; OVP) can be connected by way of a changeover switch (US) to the preselection stage (PSF), and in that the changeover switch (US) is controllable in such a way that, before the activation of the terminal unit (EG), the output of the second input amplifier (OVP) is connected to the preselection stage (PSF) and, after the activation of the terminal unit (EG), the first input amplifier (BBA) connected to the modules of the first receiving channel is additionally connected to the preselection stage (PSF).

10. Communications system with at least two terminal units (EG) according to one of claims 4 - 9, which terminal units are coupled inductively to a transmission line.

## Revendications

1. Procédé pour activer des terminaux (EG) d'un système de communication, qui sont reliés entre eux par l'intermédiaire d'une ligne de transmission (ÜL) commune et parmi lesquels chacun est prévu pour l'envoi de signaux d'activation à tous les autres terminaux (EG), caractérisé par le fait que, dans chaque terminal (EG), on traite les signaux de communication transmis dans une première voie de réception et les signaux d'activation dans une deuxième voie de réception dans laquelle il est prévu un comparateur (COMP) qui compare les signaux d'activation reçus à une tension de référence (ref-s) et qui, après la détection d'un signal d'activation, envoie un signal de commande à une unité de commande (PS) qui fait passer le terminal (EG) d'un mode d'économie d'énergie à un mode de fonctionnement normal et qui met en service la première voie de réception.

2. Procédé selon la revendication 1, caractérisé par le fait qu'il est monté du côté amont du comparateur (COMP) un étage de filtrage (RC-F), qui laisse passer des signaux d'activation à basse fréquence vers l'unité de commande (PS) et qui bloque des signaux parasites à haute fréquence ou des signaux utiles transmis sur la ligne de transmission (ÜL).

3. Procédé selon la revendication 1 ou 2, caractérisé par le fait qu'il est monté du côté amont du comparateur (COMP) et de l'étage de filtrage (RC-F), un circuit de régulation, par lequel ses signaux d'entrée sont réglés sur la valeur d'une tension de référence (ref-n) et que la constante de temps du circuit de régulation a été choisie telle que les signaux d'activation sont retransmis presque sans être altérés.

4. Terminal (EG) pour un système de communication, qui comporte plusieurs terminaux (EG) qui sont reliés entre eux par l'intermédiaire d'une ligne de transmission (ÜL) commune et parmi lesquels chacun est prévu pour l'envoi de signaux d'activation à tous les autres terminaux (EG), caractérisé par le fait qu'il est prévu dans chaque terminal (EG) une première voie de réception pour les signaux de communication transmis et une deuxième voie de réception qui est destinée aux signaux d'activation et dans laquelle un comparateur (COMP) compare des signaux d'activation reçus à une tension de référence (ref-s) et, après la détection d'un signal d'activation, envoie un signal de commande à une unité de commande (PS) qui fait passer le terminal (EG) d'un mode d'économie d'énergie à un mode de fonctionnement normal et qui met en service la première voie de réception.

5. Terminal (EG) selon la revendication 4, caractérisé par le fait qu'il est monté du côté amont du comparateur (COMP) un étage de filtrage (RC-F), qui laisse passer des signaux d'activation à basse fréquence vers l'unité de commande (PS) et qui bloque des signaux parasites à haute fréquence ou des signaux utiles transmis sur la ligne de transmission (ÜL).

6. Terminal (EG) selon la revendication 4 ou 5, caractérisé par le fait qu'il est monté du côté amont du comparateur (COMP) et de l'étage de filtrage (RC-F), un circuit de régulation, par lequel ses signaux d'entrée sont réglés sur la valeur d'une tension de référence (ref-n), la constante de temps du circuit de régulation étant choisie telle que les signaux d'activation sont retransmis presque sans être altérés.

7. Terminal (EG) selon la revendication 6, caractérisé par le fait que le circuit de régulation est constitué d'un étage de présélection (PSF) commandable, d'un étage mélangeur (MX) relié à un oscillateur local (LO), d'un filtre à fréquence intermédiaire (IF-F), d'un amplificateur à fréquence intermédiaire (IF-A) commandable, d'un étage redresseur (RECT) et d'un étage de régulation (AGCU) dont l'entrée est reliée à la sortie de l'étage redresseur (RECT) et dont la sortie est reliée aux entrées de commande de l'étage de présélection (PSF) et de l'amplificateur à fréquence intermédiaire (IF-A).

8. Terminal (EG) selon l'une des revendications 4 à 7, caractérisé par le fait qu'une partie de la ligne de transmission (ÜL) forme l'enroulement primaire (PW) d'un transformateur qui comporte deux enroulements secondaires (SW1, SW2), que le premier enroulement secondaire (SW1) peut être relié par l'intermédiaire d'un premier interrupteur (S1) à la première voie de réception et le deuxième enroulement secondaire (SW2) peut être relié par l'intermédiaire d'un deuxième interrupteur (S2) à la deuxième voie de réception et que les interrupteurs (S1, S2) peuvent être commandés de telle sorte que, avant l'activation du terminal (EG), la deuxième voie de réception est raccordée à la ligne de transmission (ÜL) et, après l'activation du terminal (EG), la première voie de réception est couplée à la ligne de transmission (ÜL).

9. Terminal (EG) selon la revendication 8, caractérisé par le fait que le premier enroulement secondaire (SW1) est relié par l'intermédiaire du premier interrupteur (S1) à un premier amplificateur d'entrée (BBA) et le deuxième enroulement secondaire (SW2) est relié par l'intermédiaire du deuxième interrupteur (S2) à un deuxième amplificateur d'entrée (OVP), que le premier et le deuxième amplificateur d'entrée (BBA ; OVP) peuvent être reliés par l'intermédiaire d'un commutateur (US) à l'étage de présélection (PSF) et que le commutateur (US) peut être commandé de telle sorte que, avant l'activation du terminal (EG), la sortie du deuxième amplificateur d'entrée (OVP) est reliée à l'étage de présélection (PSF) et, après l'activation du terminal (EG), le premier amplificateur d'entrée (BBA) relié aux modules de la première voie de réception est relié en plus à l'étage de présélection (PSF).

10. Système de communication comportant au moins deux terminaux (EG) selon l'une des revendications 4 à 9, lesquels terminaux sont couplés par induction à une ligne de transmission.
